# EUROPÄISCHE PATENTANMELDUNG

(11) **EP 0 743 127 A2**
(43) Veröffentlichungstag der Anmeldung: **20.11.1996**
(21) Anmeldenummer: 96107745.0
(22) Anmeldetag: 15.05.1996
(51) Int. Cl.: B23K 11/11

(54) **Verfahren zur Schweissspritzererkennung und Einrichtung zur Durchführung des Verfahrens**

(30) Priorität: 17.05.1995 DE 19518029
(71) Anmelder: Licentia Patent-Verwaltungs-GmbH, 60596 Frankfurt (DE)
(72) Erfinder: Schaffarra, Christian, Dipl.-Ing., D-59597 Erwitte (DE); Hachmann, Volker, Dipl.-Ing., D-59939 Olsberg (DE)
(74) Vertreter: Erbacher, Alfons, Dipl.-Ing.

(57) **Zusammenfassung**

Zur Erzielung guter Schweißverbindungen sollte ein Elektroschweißgerät knapp unterhalb der Grenze, an der Schweißspritzer auftreten, betrieben werden. Für eine automatische Nachregulierung der Schweißparameter muß zuverlässig detektiert werden, ob während eines Schweißvorgangs gerade Schweißspritzer auftreten oder nicht.
Durch Auswertung der Signale, die von einem an einer Schweißelektorde angebrachten Beschleunigungsaufnehmer 5 stammen, läßt sich das Auftreten von Schweißspritzern ermitteln. Dazu werden die hochfrequenten und/oder die niederfrequenten Signalanteile erfaßt, und es wird überprüft, ob sie einen festgelegten Grenzwert übersteigen.

## Beschreibung

Die Erfindung betrifft Verfahren zur Erkennung von Schweißspritzern bei einem Schweißgerät mit zwei mindestens zwei Schweißelektroden und mit mindestens einem Schwingungsaufnehmer, welcher die von mindestens einer Schweißelektrode stammenden und Schweißspritzererkennungseinrichtung mit zwei Schweißelektroden und mit mindestens einem Schwingungsaufnehmer, welcher die von mindestens einer Schweißelektrode stammenden Schwingungen aufnimmt, insbesondere zur Durchführung eines Verfahrens zur Erkennung von Schweißspritzern.

Eine derartige Schweißspritzererkennungseinrichtung ist aus der DE-OS 30 25 515 bekannt. Dort wird die Häufigkeit des Auftretens von Schweißspritzern als Maß für das Qualitätsniveau von Schweißverbindungen angesehen. Bei einer hohen Anzahl von auftretenden Schweißspritzern in Relation zu den durchgeführten Schweißungen (im Extremfall bei allen Schweißpunkten) besteht die Gefahr einer Schwächung der jeweiligen Verbindung infolge übermäßigen Elektrodeneinbrands sowie eines Werkstoffverlustes innerhalb der Schweißnahtzone. Die Häufigkeit der auftretenden Schweißspritzer wird im bekannten Falle erfaßt, und das Ergebnis zum gezielten Nachstellen des Schweißstromes genutzt. Dabei wird die Stärke des elektrischen Stromes möglichst nahe unterhalb des Schweißspritzer verursachenden Wertes einjustiert.

Problematisch ist das zuverlässige und sichere Erkennen (Detektieren) des Auftretens von Schweißspritzern anhand der von dem Beschleunigungsaufnehmer abgegebenen Signale. Von äußeren Erschütterungen herrührende Signale des Beschleunigungsaufnehmers (äußere Störeinflüsse) dürfen nämlich nicht als von Schweißspritzern herrührend gewertet werden.

Der Erfindung liegt die Aufgabe zugrunde, zum einen ein Verfahren zur Schweißspritzererkennung zu schaffen, mit Hilfe dessen möglichst fehlerfrei und zuverlässig das Auftreten von Schweißspritzern erfaßt wird, und zum andern eine Schweißspritzererkennungseinrichtung zu schaffen.

Diese Aufgabe wird erfindungsgemäß bei dem Verfahren dadurch gelöst,
- daß lediglich dann das Auftreten von Schweißspritzern detektiert wird, wenn die niederfrequenten, die hochfrequenten oder gleichzeitig die niederfrequenten und die hochfrequenten Anteile der mittelbar oder unmittelbar vom Schwingungsaufnehmer stammenden Signale festgelegte Grenzwerte übersteigen,
und bei der Schweißspritzererkennungseinrichtung dadurch
- daß ausgangsseitig an den Schwingungsaufnehmer eine einstellbare Signalanpassungseinrichtung angeschlossen ist und daß bei Überschreiten eines vorgegebenen Signalpegels am Ausgang dieser Signalanpassungseinrichtung das Auftreten von Schweißspritzern detektiert wird.

Mit dem erfindungsgemäßen Verfahren werden an den Elektroden auftretende Schwingungen aufgenommen und in ein elektrisches Signal umgewandelt. Das elektrische Signal wird dann ausgewertet, um festzustellen, ob Schweispritzer aufgetreten sind oder nicht.

Für eine ordnungsgemäße Funktionsweise kann der Schwingungsaufnehmer entweder unmittelbar an der Schweißelektrode oder an einer Halterung für die Schweißelektrode befestigt werden. Es muß lediglich sichergestellt werden, daß er die von mindestens einer Schweißelektrode stammden (Körperschall-)Schwingungen aufnimmt.

Die Schweißspritzererkennungseinrichtung läßt sich in der Widerstandsschweißtechnik anwenden, also insbesondere für das Punktschweißen, das Buckelschweißen, das Nahtschweißen und das Widerstandslöten.

Es hat sich nämlich gezeigt, daß bei Auftreten von Schweißspritzern im Frequenzbereich bis zu einem Grenzwert im Bereich von 6 bis 7 kHz besonders hohe Signalpegel festzustellen sind.

Auch bei Frequenzen über 28 bis 30 kHz, insbesonder im Bereich von 30 kHz, treten - im Falle von Schweißspritzern - hohe Signalpegel auf. Aus den Signalpegeln läßt sich folglich umgekehrt auf das Auftreten von Schweißspritzern schließen.
Der Schwingungsaufnehmer kann ein Beschleunigungsaufnehmer oder ein Schallwandler sein. Ein Schallwandler ist ein piezoelektrisches Element, was als günstig erhältliches Standardbauteil weite Verbreitung gefunden hat. Beispielsweise wird es als Summer oder als PC-Lautsprecher verwendet. Bei einer derartigen Verwendung zur Erzeugung von Signaltönen wird durch eine angelegte Spannung das Piezoelement des Schallwandlers in Schwingungen versetzt, die auf das Gehäuse des jeweiligen Gerätes übertragen werden. Bei der erfindungsgemäßen Lösung rufen auf den Schallwandler einwirkende Schwingungen ein Spannungssignal hervor, das zur Detektierung von Schweißspritzern ausgewertet wird.
Es hat sich gezeigt, daß die Empfindlichkeit des (üblicherweise sehr flach ausgebildeten) Schallwandlers erheblich erhöht wird, wenn er über eine kleine Distanzscheibe an der Elektrode oder einer Halterung für die Elektrode befestigt wird. Üblicherweise hat der Schallwandler die Form einer kleinen Scheibe; dann sollte die Distanzscheibe einen kleineren Durchmesser haben als der Schallwandler, der dann seitlich über die Distanzscheibe hinausragt. In diesem Fall kann er besonders gut in Schwingungen versetzt werden, wodurch besonders große Amplituden am Ausgangssignal hervorgerufen werden. Wenn der Schallwandler mit dem integrierten Piezoelement beispielsweise einen Durchmesser von 12 mm hat, dann wird eine besonders hohe Empfindlichkeit erreicht, wenn die Distanzscheibe einen Durchmesser von lediglich 2 mm hat. Bei Verwendung eines Schallwandlers als Schwingungsaufnehmer werden von ihm ausgegebene Signale mit einer Frequenz unter ca. 100 Hz nicht bei der nachfolgenden Auswertung berücksichtigt werden. Es hat sich nämlich gezeigt, daß beim praktischen Einsatz in diesem Frequenzbereich von dem Schallwandler auch dann (verhältnsimäßig starke) Signale abgegeben werden, wenn gerade keine Schweißspritzer auftreten; diese Signale würden zu fehlerhaften Auswertungen führen. Diese Signale lassen sich durch einen Hochpass (mit einer unteren Grenzfrequenz von 100 Hz), der dem Schallwandler nachgeschaltet ist, herausfiltern.

Eine besonders sichere Detektierung von Schweißspritzern - unter Ausschluß von außen einwirkenden Störeinflüssen - ist bei einer gleichzeitigen Berücksichtigung der niederfrequenten und der hochfrequenten Signale möglich.
In Abhängigkeit von der benutzten Schweißvorrichtung sind die in den weiter oben genannten Frequenzbereichen auftretenden Signalpegel unterschiedlich hoch. Deshalb sollten die Pegelauswertungseinheiten für beide Frequenzbereiche unterschiedliche (vorzugsweise einstellbare) Grenzwerte aufweisen.

Die Grenzwerte für die Frequenzen sollten an jedem Tiefpass, an jedem Hochpass und an jedem Bandpass, damit diese Grenzwerte an die Gegegebenheiten der jeweils benutzten Schweißvorrichtung angepaßt werden können.

Zur Vermeidung von fehlerhaften Auswertungen ist es vorteilhaft, daß zu jeder einzelnen Schweißung nur während einer bestimmten Auswertezeit (als Zeitschlitz) ein Überschreiten der festgelegten Grenzwerte für das Ausgangssignal des Schwingungsaufnehmers überwacht wird.
Die Auswertezeit beginnt vorzugsweise nach dem Verstreichen einer festgelegten Ausblendungszeit, die wiederum mit dem Beginn der Stromzeit des Schweißstroms anfängt. Die Ausblendungszeit kann eine Dauer von 1 bis 3 Netzperioden haben.
Die Auswertezeit kann um eine kurze Zeitspanne, beispielsweise um eine halbe Netzperiode, über das Ende der Stromzeit hinausgehen.

Es hat sich gezeigt, daß zur zuverlässigen Detektion von Schweißspritzern lediglich die niederfrequenten und/oder die hochfrequenten von dem Schwingungswandler stammenden Signalanteile überwacht werden müssen. Zum Herausfiltern der relevanten Signalanteile eignen sich für die niederfrequenten Anteile Tiefpässe (oder Bandpässe für die niedrigen Frequenzen).

Im folgenden wird ein Ausführungsbeispiel der Erfindung anhand von acht Zeichnungen, aus denen sich weitere Einzelheiten und Vorteile ergeben, näher beschrieben.

Es zeigen:
- Fig. 1: die Anordnung des Beschleunigungsaufnehmers an einer Elektrode,
- Fig. 2: ein Blockschaltbild für die Schweißspritzererkennungseinrichtung,
- Fig. 3: einen Zeitstrahl mit den für die Auswertung relevanten Zeiten,
- Fig. 4: den Verlauf eines Schweißstroms und das zugehörige Signal des Beschleunigungsaufnehmers,
- Fig. 5: das gedehnte Signal des Beschleunigungsaufnehmers und darunter die Verteilung der Frequenzanteile,
- Fig. 6: die Anordnung eines Schallwandlers an einer Elektrode in einer Seitenansicht,
- Fig. 7: die Anordnung nach Fig. 6 in einer Frontansicht und
- Fig. 8: ein Blockschaltbild für die Schweißspritzererkennungseinrichtung mit einem Schallwandler.

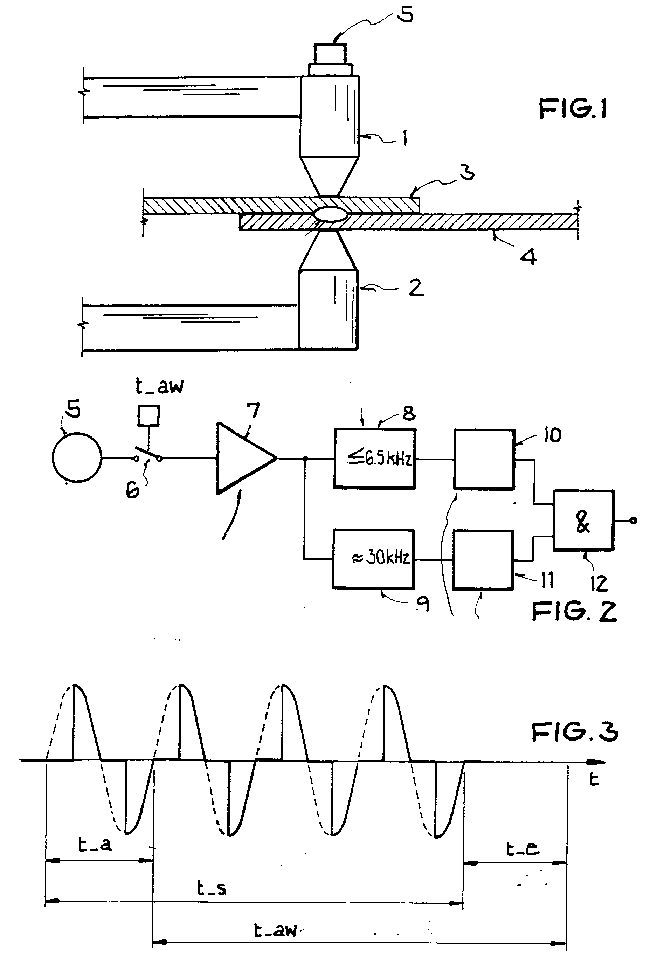

In Fig. 1 sind zwei übereinander angeordnete Elektroden 1, 2 eines Elektroschweißgerätes zu sehen, zwischen denen sich zwei miteinander zu verschweißende Bleche 3, 4 befinden. Die Elektroden 1, 2 sind an den den Blechen 3, 4 zugewandten Seiten angespitzt. Sie dienen dem Punktschweißen der Bleche 3, 4.
Im Verlaufe der Dauer eines Schweißstromflusses durch die Elektroden 1, 2 und durch die Bleche 3, 4, also während der Stromzeit t_s bildet sich im Bereich zwischen den Blechen - wegen des hohen ohmschen Widerstandes an dieser Stelle - eine Schweißlinse aus geschmolzenem Material. Wenn der Strom zu stark ist, platzt die Schweißlinse auf, und es treten Schweißspritzer auf. Dabei wird flüssiges Material fortgeschleudert, und es entstehen bei dieser kleinen Explosion Schwingungen, die als Körperschallschwingungen eine Beschleunigung der Schweißeinrichtung (insbesondere der Elektroden 1, 2) auslösen.

Auf der oberen Elektrode 1 befindet sich ein Beschleunigungsaufnehmer 5, der in Längsrichtung der Elektrode 1 auftretende Schwingungen erfaßt und in elektrische Signale umwandelt.
Die Fig. 2 zeigt den Weg, den die vom Beschleunigungsaufnehmer 5 stammenden Signale nehmen. Zunächst werden sie über einen steuerbaren Schalter 6 geleitet, dessen Arbeitsweise weiter unten im Zusammenhang mit der Fig. 3 noch erläutert wird. Hinter dem Schalter 6 befindet sich eine Signalanpassungseinrichtung 7, die im wesentlichen das ankommende Signal verstärkt.
An den Ausgang dieser Signalanpassungseinrichtung 7 sind sowohl ein Tiefpass 8 als auch ein Bandpass 9 angeschlossen. Der Tiefpass 8 leitet lediglich Signale mit einer Frequenz bis ca. 6,5 kHz weiter, der Bandpass 9 nur solche Signale, die in einem Frequenzbereich um ca. 30 kHz liegen. Sowohl hinter dem Tiefpass 8 als auch hinter dem Bandpass 9 ist jeweils eine Pegelauswertungseinrichtung 10, 11 geschaltet. Da in den genannten Frequenzbereichen die Signalpegel in Abhängigkeit von der verwendeten Schweißvorrichtung andere Amplituden haben, sind die Grenzwerte für die auszuwertenden Amplituden für beide Frequenzbereiche einstellbar. Auch der Durchlaßfrequenzbereich des Bandpasses 9 ist verstellbar und somit an die jeweilige Schweißvorrichtung anpaßbar.

Diese Pegelauswertungseinrichtungen 10, 11 sprechen nur dann an, wenn ihr jeweils am Eingang liegendes Signal einen (zuvor eingestellten) Grenzwert übersteigt. Die Pegelauswertungseinrichtungen 10, 11 sind an ein gemeinsames UND-Gatter 12 geführt. Wenn dort am Ausgang ein (von null verschiedenes) Signal anliegt, wird das Auftreten von Schweißspritzern angenommen.

Fig. 3 zeigt einen Zeitstrahl t, auf dem der Verlauf des Schweißstromes durch die Elektroden 1, 2 dargestellt ist. Für die zugehörige Punktschweißung werden vier volle Netzperioden benötigt. Die Zeit für diese vier Netzperioden wird Stromzeit t_s genannt. Die Auswertung der von dem Beschleunigungsaufnehmer 5 stammenden Signale wird während einer Auswertezeit t_aw vorgenommen. Nur während dieser Auswertezeit t_aw ist der Schalter 6 aus Fig. 1 geschlossen und ermöglicht die Weiterleitung der vom Beschleunigungsaufnehmer 5 stammenden Signale an die Signalanpassungseinrichtung 7. Diese Auswertezeit t_aw beginnt nicht mit der Stromzeit t_s, sondern um die Ausblendungszeit t_a verzögert, welche eine volle Netzperiode dauert.
Die während dieser Ausblendungszeit t_a auftretenden Stromsignale werden nicht ausgewertet, da währenddessen Störsignale auftreten, die zu einem falschen Ergebnis der Auswertung führen würden.
Die Auswertezeit t_a geht in ihrer Dauer noch über die Stromzeit t_s hinaus und endet mit dem Ablauf einer Endezeit t_e, die erst mit dem Ablauf der Stromzeit t_s beginnt. Auf diese Weise werden die kurz nach Ende der Stromzeit t_s auftretenden Schweißspritzer noch erfaßt. Die Endezeit t_e hat vorteilhafterweise eine Dauer von 10 ms, was einer halben Netzperiode entspricht.

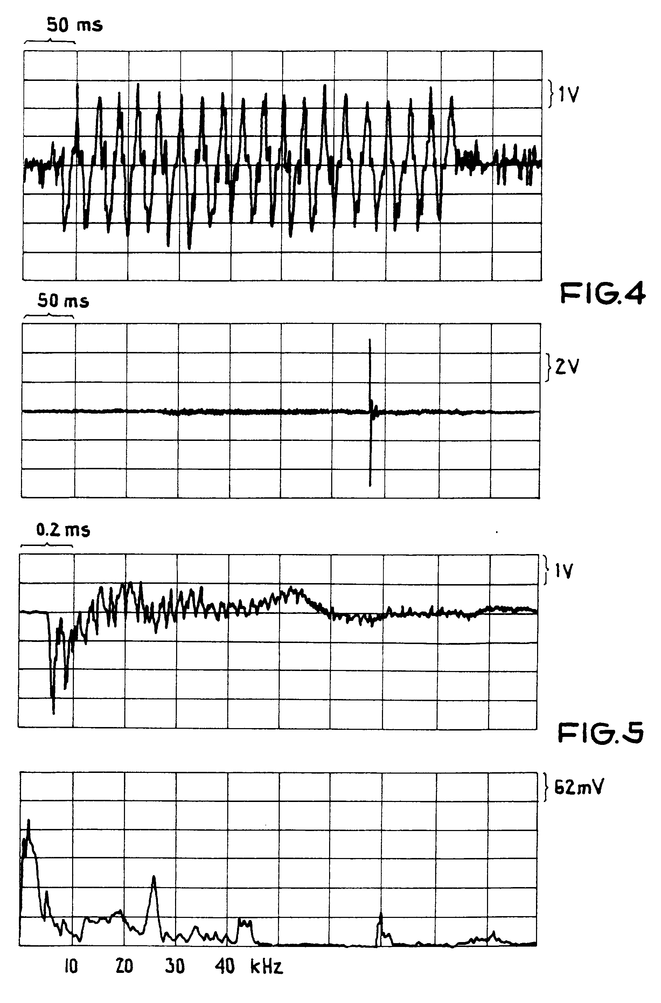

Fig. 4 zeigt oben den an einer realisierten Ausführungsform aufgenommen Verlauf des Schweißstromes und darunter das zugehörige Signal des gemäß Fig. 1 an einer Elektrode 1 befestigten Beschleunigungsaufnehmers 5 beim Auftreten von Schweißspritzern.

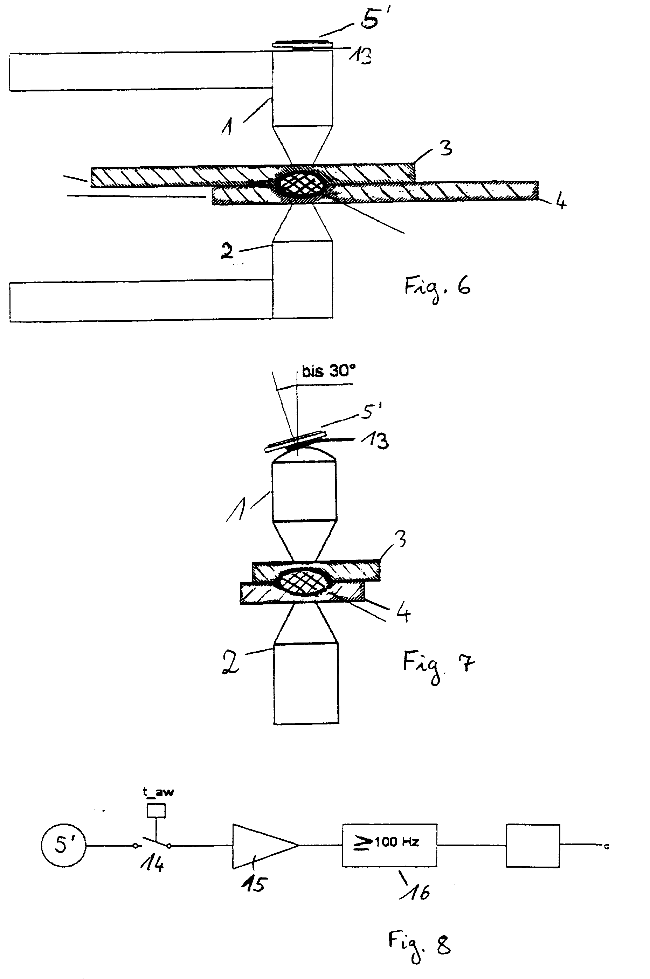

In Fig. 5 ist oben der Verlauf des bei einem Schweißspritzer auftretenden Signals aus dem Beschleunigungsaufnehmer 5 zu sehen, und zwar in einer im Vergleich zu der Fig. 4 zeitlich stark gedehnten Darstellung.
Darunter ist das Ergebnis einer Frequenzanalyse dieses Signals dargestellt. Es ist deutlich zu sehen, daß die nieder- und die hochfrequenten Anteile des Signals besonders hohe Amplituden aufweisen, während dazwischen liegende Frequenzanteile vernachlässigbar sind.

In den Fig. 4 und 5 sind die Werte in x- (waagerecht) und in y-Richtung (senkrecht) jeweils linear aufgetragen; welchen Werten die Abmessungen der Kästchen entsprechen, ist jeweils angegeben.

Fig. 6 zeigt die Elektroden der Schweißvorrichtung nach Fig. 1, wobei allerdings auf der oberen Elektrode 1 statt eines Beschleunigungsaufnehmers ein scheibenförmiger piezokeramischer Schallwandler 5' befestigt ist. Der Schallwandler 5' hat einen Durchmesser von 12 mm. Unmittelbar unter dem Schallwandler 5' befindet sich eine Distanzscheibe 13, die einen Durchmesser von lediglich 2 mm hat. Der Schallwandler 5' ragt ringsum seitlich über die Distanzscheibe 13 hinaus. Selbstverständlich läßt sich der Schallwandler 5' auch unter der unteren Elektrode 2 montieren, ebenfalls mit einer Distanzscheibe 13 zwischen dem Schallwandler 5' und der unteren Elektrode 2.

Fig. 7 zeigt die Anordnung nach Fig. 6 in einer Frontansicht. Es ist deutlich zu sehen, daß der Schallwandler 5' und die Distanzscheibe um ca. 30° zur Bewegungs- und Schwingungsrichtung der Elektroden 1 und 2 geneigt ist. Der Schallwandler 5' braucht im Gegensatz zum Beschleunigungsaufnehmer 5 nicht in Längsrichtung zur Schwingungsrichtung der Elektroden 1 und 2 montiert sein.

In Fig. 8 ist das Blockschaltbild für eine Schweißvorrichtung mit einem Schallwandler 5' zu sehen. Der Ausgang des Schallwandlers 5' ist zu einem Schalter 15 geführt, der lediglich während einer Auswertezeit ta_w geschlossen ist und währenddessen die Ausgangssignale des Schallwandlers zur Auswertung weiterleitet. Hinter dem Schalter folgt eine Signalanpassungseinrichtung 15 (mit Verstärker) und dahinter ein Hochpass 16, der lediglich Frequenzen ab 100 Hz durchläßt. An diesen Hochpass ist eine Pegelauswertungsschaltung angeschlossen, die beispielsweise so aussehen könnte wie die an den Verstärker 7 in Fig. 2 angeschlossene Teilschaltung mit einem Zweig mit einem Tiefpass und einem Zweig mit einem Hochpass und einem UND-Gatter, dem beide Zweige zugeführt sind. Nur wenn die hochfrequenten Signalanteile und die niederfrequenten Signalanteile zugleich jeweils einen eigenen (vorher festgelegten) Grenzwert übersteigen, wird das Auftreten von Schweißspritzern angenommen.

## Patentansprüche

1. Verfahren zur Erkennung von Schweißspritzern bei einem Schweißgerät mit zwei mindestens zwei Schweißelektroden und mit mindestens einem Schwingungsaufnehmer, welcher die von mindestens einer Schweißelektrode stammenden Schwingungen aufnimmt,
**dadurch gekennzeichnet,**
daß lediglich dann das Auftreten von Schweißspritzern detektiert wird, wenn die niederfrequenten, die hochfrequenten oder gleichzeitig die niederfrequenten und die hochfrequenten Anteile der mittelbar oder unmittelbar vom Schwingungsaufnehmer stammenden Signale festgelegte Grenzwerte übersteigen.

2. Verfahren nach Anspruch 1,
dadurch gekennzeichnet,
daß die niederfrequenten Anteile in einem Frequenzbereich bis maximal 6 bis 7 kHz und die hochfrequenten Anteile in einem Frequenzbereich oberhalb von 28 bis 32 kHz liegen.

3. Verfahren nach Anspruch 1 oder 2,
dadurch gekennzeichnet,
daß die hochfrequenten Anteile in einem Frequenzbereich von 20 bis 35 kHz liegen.

4. Verfahren nach einem der vorangehenden Ansprüche,
dadurch gekennzeichnet,
daß der Schwingungsaufnehmer ein Beschleunigungsaufnehmer oder ein Schallwandler ist.

5. Verfahren nach Anspruch 4,
dadurch gekennzeichnet,
daß der Schallwandler über eine Distanzscheibe mit einer gegenüber dem Schallwandler geringerer Oberflächenabmessung an der Elektrode oder einer Halterung der Elektrode befestigt ist und daß bei Verwendung eines Schallwandlers lediglich vom Schallwandler stammende Signale mit einer Frequenz ab ca. 100 Hz für die Auswertung herangezogen werden.

6. Verfahren nach einem der vorangehenden Ansprüche,
dadurch gekennzeichnet,
daß nur dann ein Auftreten von Schweißspritzern detektiert wird, wenn innerhalb einer Auswertezeit (t_aw) das Überschreiten des vorgegebenen Grenzwertes für den Signalpegel erfaßt wird.

7. Verfahren nach einem der vorangehenden Ansprüche,
dadurch gekennzeichnet,
daß die Auswertezeit (t_aw) nach Verstreichen einer festgelegten Ausblendungszeit (t_a) beginnt und daß die Ausblendungszeit (t_a) mit dem Beginn der Stromzeit (t_s) des Schweißstromes einsetzt.

8. Schweißspritzererkennungseinrichtung mit zwei Schweißelektroden und mit mindestens einem Schwingungsaufnehmer, welcher die von mindestens einer Schweißelektrode stammenden Schwingungen aufnimmt, insbesondere zur Durchführung eines Verfahrens nach den vorangehenden Ansprüchen,
**dadurch gekennzeichnet,**
daß ausgangsseitig an den Schwingungsaufnehmer eine einstellbare Signalanpassungseinrichtung (7) angeschlossen ist und daß bei Überschreiten eines vorgegebenen Signalpegels am Ausgang dieser Signalanpassungseinrichtung (7) das Auftreten von Schweißspritzern detektiert wird.

9. Schweißspritzererkennungseinrichtung nach Anspruch 1,
dadurch gekennzeichnet,
daß der Schwingungsaufnehmer ein Beschleungigungsaufnehmer oder ein Schallwandler ist, daß der Signalanpassungseinrichtung (7) ein Tiefpass (8), ein Bandpass und/oder ein Hochpass nachgeschaltet ist/sind und daß bei Überschreiten eines vorgegebenen Grenzwertes in einer hinter dem Tiefpass (8), dem Bandpass und/oder dem Hochpass geschalteten Pegelauswertungseinrichtung (10) das Auftreten von Schweißspritzern detektiert wird, daß der Bandpass einen Durchlaßfrequenzbereich um ca. 6 kHz, von 20 bis 35 kHz oder um 30 kHz hat und daß im Falle eines Schallwandlers als Schwingungsaufnehmer hinter dessen Signalanpassungseinrichtung ein zusätzlicher Hochpass mit einer unteren Grenzfrequenz von 100 Hz nachgeschaltet ist.

10. Schweißspritzererkennungseinrichtung nach Anspruch 9,
dadurch gekennzeichnet,
daß der Tiefpass (8) eine obere Grenzfrequenz von 6 bis 7 kHz und der Hochpass eine untere Grenzfrequenz von 28 bis 32 kHz hat.
